# EUROPEAN PATENT APPLICATION

(11) **EP 4 838 820 A1**
(43) Date of publication of application: **11.11.2026**
(21) Application number: 25731398.1
(22) Date of filing: 06.01.2025
(51) Int. Cl.: H04L 5/00, H04W 72/21, H04L 25/02, H04W 52/36, H04W 8/22, H04B 7/06

(54) **METHOD FOR SRS TRANSMISSION AND RECEPTION AND DEVICE THEREOF**

(30) Priority: 04.01.2024 US 202463617725 P
(71) Applicant: LG Electronics Inc., Seoul 07336 (KR)
(72) Inventor: GO, Seongwon, Seoul 06772 (KR); KIM, Kijun, Seoul 06772 (KR); YANG, Suckchel, Seoul 06772 (KR); KANG, Jiwon, Seoul 06772 (KR); PARK, Haewook, Seoul 06772 (KR); KIM, Seonwook, Seoul 06772 (KR)
(74) Representative: Frenkel, Matthias Alexander
(86) International application number: PCT/KR2025/000224
(87) International publication number: WO 2025/147173

(57) **Abstract**

A method according to an embodiment of the present disclosure includes receiving configuration information from a base station, and transmitting, to the base station, an SRS based on the at least one SRS resource set. At least one sounding reference signal (SRS) resource set related to antenna switching is configured based on the configuration information. The SRS is transmitted in different symbols based on multiple SRS resources in the at least one SRS resource set. Based on a number of ports configured in each of the multiple SRS resources being different, a transmit power related to each port of one of the multiple SRS resources is same.

## Description

### [TECHNICAL FIELD]

The present disclosure relates to a method and device for transmitting and receiving SRS.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies,, such as dual connectivity, massive multiple input multiple output (MIMO), in-band full duplex, non-orthogonal multiple access (NOMA), super wideband support, and device networking.

According to the existing standard, SRS transmit power of SRS resources is equally split across 'ports of the SRS resources' in a 'symbol'. In antenna switching for DL CSI acquisition, multiple SRS resources may be transmitted in different symbols.

### [DISCLOSURE]

### [TECHNICAL PROBLEM]

With respect to the above-described antenna switching, the number of ports configured in each of the multiple SRS resources may vary depending on UE capability (e.g., 4T6R, 2T3R, 3T8R, etc.) to be supported subsequently (e.g., 4 port SRS + 2 port for 4T6R). In this case, a problem occurs in which the transmit power per port varies for each symbol.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method according to an embodiment of the present disclosure includes receiving configuration information from a base station, and transmitting, to the base station, an SRS based on the at least one SRS resource set. At least one sounding reference signal (SRS) resource set related to antenna switching is configured based on the configuration information.

The SRS is transmitted in different symbols based on multiple SRS resources in the at least one SRS resource set.

Based on a number of ports configured in each of the multiple SRS resources being different, a transmit power related to each port of one of the multiple SRS resources is same.

The multiple SRS resources may be related to a same SRS transmission occasion. A transmit power for the SRS may be determined based on the same SRS transmission occasion.

A transmit power for the SRS may be equally split across ports based on the multiple SRS resources in the different symbols.

Among transmit powers per port determined for the multiple SRS resources, a lowest transmit power may be applied to ports of the multiple SRS resources.

The number of ports configured in each of the multiple SRS resources may be same.

A linear value of a transmit power for the SRS may be equally split across the ports of each SRS resource of each SRS resource set in a symbol.

The at least one SRS resource set may be configured based on a user equipment (UE) capability. The UE capability of xTyR may represent that a UE is capable of an SRS transmission on x ports based on y antennas.

The y antennas may be based on all or a subset of UE receive antennas.

Based on the UE capability of 3TyR: each SRS resource in the at least one SRS resource set may include four antenna ports, and in each SRS resource, the SRS may be transmitted based on at least one antenna port of the four antenna ports.

Based on the UE capability of 3T3R or 3T6R, the at least one antenna port may be three antenna ports.

The three antenna ports may be three antenna ports based on ascending order of antenna port indices among the four antenna ports.

A user equipment according to another embodiment of the present disclosure includes one or more transceivers, one or more processors, and one or more memories connected to the one or more processors and storing instructions.

The instructions allow the user equipment to perform all steps according to any one of the methods based on being executed by the one or more processors.

A device according to another embodiment of the present disclosure includes one or more memories and one or more processors operably connected to the one or more memories. The one or more memories store instructions that allow the device to perform all steps according to any one of the methods based on being executed by the one or more processors.

One or more non-transitory computer readable mediums according to another embodiment of the present disclosure store instructions. The instructions executable by one or more processors allow a user equipment to perform all steps according to any one of the methods.

A method according to another embodiment of the present disclosure includes transmitting configuration information to a user equipment (UE), and receiving, from the UE, an SRS based on the at least one SRS resource set. At least one sounding reference signal (SRS) resource set related to antenna switching is configured based on the configuration information.

The SRS is received in different symbols based on multiple SRS resources in the at least one SRS resource set.

Based on a number of ports configured in each of the multiple SRS resources being different, a transmit power related to each port of one of the multiple SRS resources is same.

A base station according to another embodiment of the present disclosure includes one or more transceivers, one or more processors, and one or more memories connected to the one or more processors and storing instructions.

The instructions allow the base station to perform all steps according to the method based on being executed by the one or more processors.

### [ADVANTAGEOUS EFFECTS]

Embodiments of the present disclosure can prevent transmit power of each port from varying for each symbol in SRS transmission for antenna switching. Specifically, embodiments of the present disclosure can prevent the accuracy of DL CSI related to Rx antennas of a user equipment from deteriorating when an SRS is transmitted based on an SRS resource having a different number of ports for each symbol.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF THE DRAWINGS]

FIG. 1 is a flowchart illustrating an example of a UL BM procedure using an SRS.
FIG. 2 illustrates flexible aperiodic SRS transmission timing control.
FIG. 3 illustrates partial band SRS transmission.
FIG. 4 is a flowchart illustrasting a method according to an embodiment of the present disclosure.
FIG. 5 is a flowchart illustrasting a method according to another embodiment of the present disclosure.
FIG. 6 illustrates configurations of a first device and a second device according to an embodiment of the present disclosure.

### [DETAILED DESCRIPTION]

Hereinafter, embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

### < SRS related operation >

The UE may be configured with one or more Sounding Reference Symbol (SRS) resource sets configured by (higher layer parameter) SRS-ResourceSet (through higher layer signaling, RRC signaling, etc.). For each SRS resource set, the UE may be configured with K (≥ 1) SRS resources (higher layer parameter SRS-resources). Here, K is a natural number and a maximum value of K is indicated by SRS_capability.

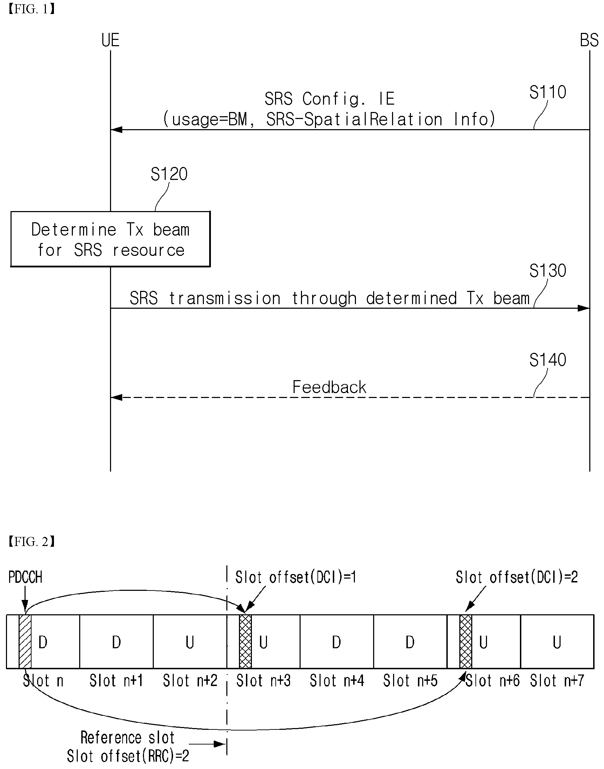

FIG. 1 is a flowchart showing an example of a UL BM procedure using an SRS.
- The UE receives, from the BS, RRC signaling (e.g., SRS-Config IE) including a usage parameter (S110). As an example, the usage parameter may be configured as 'beam management', 'codebook', 'nonCodebook', or 'antennaSwitching'.

Table 1 represents an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

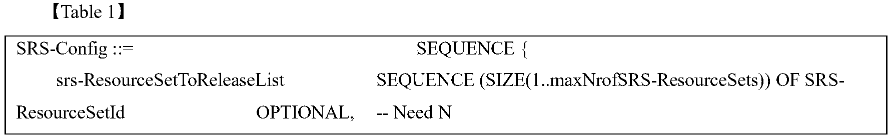

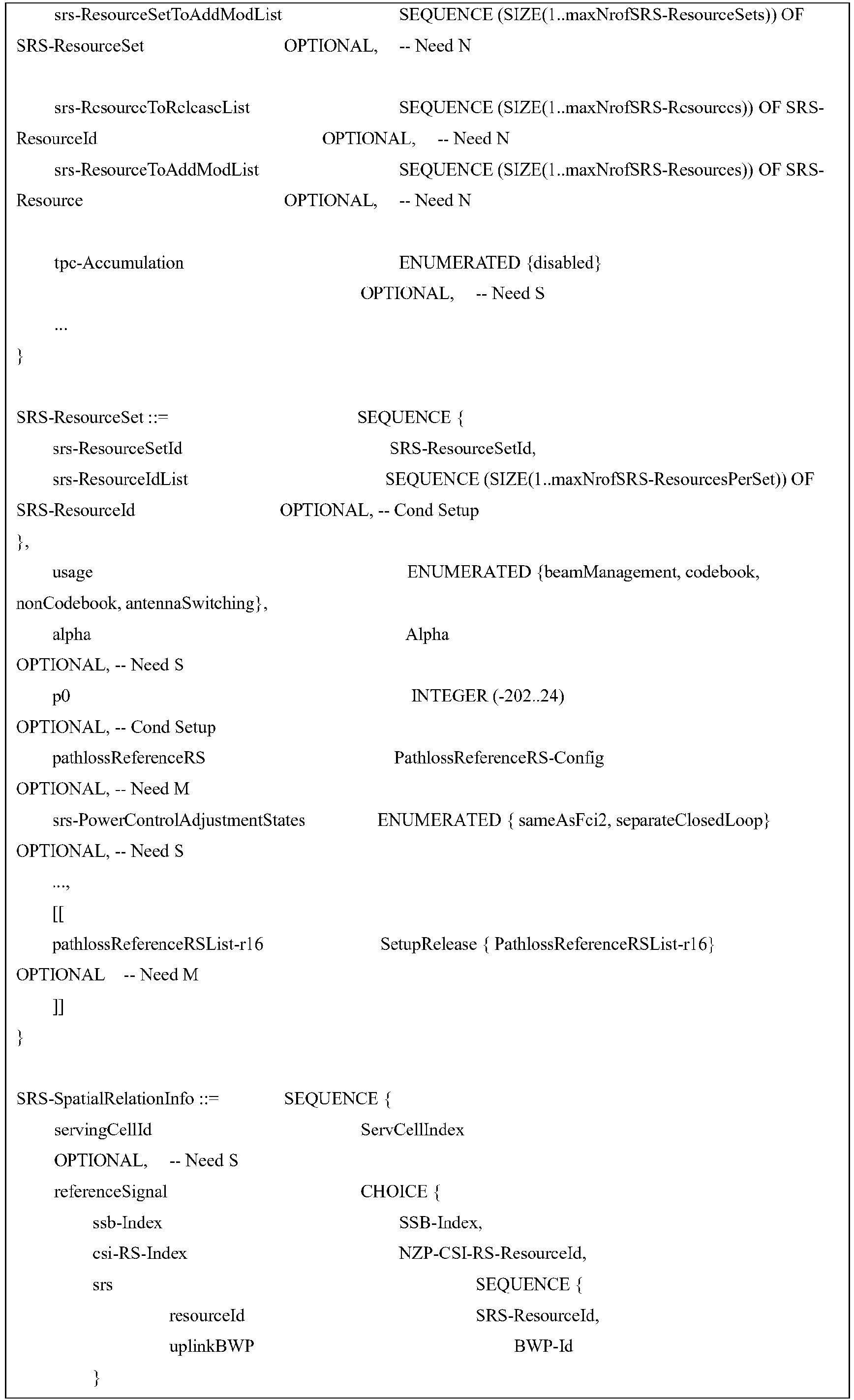

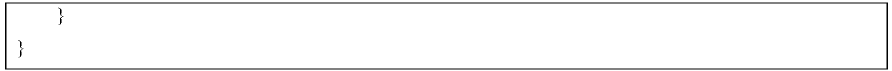

In Table 1, usage refers to a higher layer parameter to indicate whether the SRS resource set is used for beam management or is used for codebook based or non-codebook based transmission. 'spatialRelationInfo' is a parameter representing a configuration of spatial relation between a reference RS and a target SRS. The reference RS may be SSB, CSI-RS, or SRS which corresponds to L1 parameter 'SRS-SpatialRelationInfo'. The usage is configured per SRS resource set.
- The UE determines the Tx beam for the SRS resource to be transmitted based on SRS-SpatialRelation Info contained in the SRS-Config IE in S120. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.
- If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS via the determined Tx beam in S130.
- Additionally, the UE may receive or not receive a feedback for the SRS from the BS (S140).

At least one of the operations of the UE/base station based on the S110 to S140 described above may be combined and applied with at least one of embodiments described below (e.g., at least one of Proposals 1 to 5).

### <Sounding Reference Singal (SRS)>

In Rel-15 NR, spatialRelationInfo may be used to indicate a Tx beam to be used when a base station transmits an UL channel to a UE. When the base station transmits PUCCH and SRS by configuring a DL reference signal (i.e., SSB-RI, CRI(P/SP/AP)) or an SRS (i.e., SRS resource) as a reference RS for a target UL channel and/or a target RS via RRC configuration, the base station may indicate which UL Tx beam is used. Further, when the base station schedules PUSCH to the UE, a Tx beam that is indicated by the base station and is used for SRS transmission is indicated as a Tx beam for the PUSCH via an SRI field of UL grant DCI and is used as a PUSCH Tx beam of the UE.

### <SRS for 'codebook' and 'non-codebook'>

First, in the case of the CB UL, a BS may first configure and/or indicate, for a UE, the transmission of an SRS resource set for a "CB" purpose. The UE may transmit an n port SRS resource within a corresponding SRS resource set. The BS may obtain an UL channel based on the corresponding SRS transmission, and may use the UL channel for the PUSCH scheduling of the UE. Thereafter, the BS may perform PUSCH scheduling through UL DCI, and may indicate a PUSCH (transmission) beam of the UE by indicating, through an SRI field of the DCI, the SRS resource for a "CB" purpose, which has been previously transmitted by the UE. Furthermore, the BS may indicate an UL rank and an UL precoder by indicating an uplink codebook through a TPMI field. Accordingly, the UE may perform PUSCH transmission based on corresponding indication.

Next, even in the case of the NCB UL, a BS may first configure and/or indicate, for a UE, the transmission of an SRS resource set for a "non-CB" purpose. The UE may determine a precoder of SRS resources (a maximum of four resources, one port per resource) within the corresponding SRS resource set based on the reception of a NZP CSI-RS connected to the corresponding SRS resource set, and may simultaneously transmit corresponding SRS resources. Thereafter, the BS may perform PUSCH scheduling through UL DCI, and may indicate a PUSCH (transmission) beam of the UE by indicating, through an SRI field of the DCI, some of the SRS resources for a "non-CB" purpose, which have previously been transmitted by the UE, and may simultaneously indicate an UL rank and an UL precoder. Accordingly, the UE can perform PUSCH transmission based on corresponding indication.

### <SRS for 'beam management'>

The SRS may be used for beam management. Specifically, the UM BM may be performed via beamformed UL SRS transmission, and whether to apply UL BM of an SRS resource set is configured by the (higher layer parameter) usage. If the usage is set to 'BeamManagement (BM)', only one SRS resource may be transmitted to each of a plurality of SRS resource sets in a given time instant. The UE may be configured with one or more sounding reference symbol (SRS) resource sets configured by (higher layer parameter) SRS-ResourceSet (via higher layer signaling, RRC signaling, etc.). For each SRS resource set, the UE may be configured with K≥1 SRS resources (higher later parameter SRS-resource), where K is a natural number, and a maximum value of K is indicated by SRS_capability.

### <SRS for 'antennaSwitching'>

The SRS may be used for acquisition of DL channel state information (CSI) (i.e., DL CSI acquisition). As a specific example, in a single cell or multi cell (e.g., CA) situation based on TDD, a base station (BS) may schedule transmission of the SRS to a user equipment (UE), and then measure the SRS from the UE. In this case, the BS may perform scheduling of a DL signal/channel to the UE based on measurement by the SRS by assuming DL/UL reciprocity. In this case, in relation to DL CSI acquisition based on the SRS, the SRS may be configured for an antenna switching usage.

As an example, according to a specification (e.g., 3GPP TS38.214), the usage of the SRS may be configured to the BS and/or the UE by using a higher layer parameter (e.g., a usage of RRC parameter SRS-ResourceSet). In this case, the usage of the SRS may be configured as a beam management usage, a codebook transmission usage, a non-codebook transmission usage, an antenna switching usage, etc.

Hereinafter, a case where the SRS transmission (i.e., transmission of an SRS resource or an SRS resource set) is configured for the antenna switching usage among the usages will be described in detail.

As an example, in the case of a terminal with a partial reciprocity, SRS transmission based on antenna switching (i.e., transmission antenna switching) may be supported for downlink (DL) channel state information (CSI) acquisition through the SRS transmission in a situation such as time division duplex (TDD). When the antenna switching is applied, approximately 15 µs may be required between SRS resources (and/or the SRS resource and the resource between PUSCH/PUCCH) in a general case for the antenna switching of the UE. By considering such a point, a (minimum) guard period shown in Table 2 below may be defined.

**[Table 2]**

| ***µ*** | ***Δf* = 2*^{µ}* · 15** [**kHz**] | **Y [symbol]** |
|---|---|---|
| 0 | 15 | 1 |
| 1 | 30 | 1 |
| 2 | 60 | 1 |
| 3 | 120 | 2 |

In Table 2, µ represents numerology, Δf represents a subcarrier spacing, and Y represents the number of symbols of the guard period, i.e., a length of the guard period. Referring to Table 2, the guard period may be configured based on a parameter µ for determining the numerology. In the guard period, the UE may be configured not to transmit any other signal, and the guard period may be configured to be intactly used for the antenna switching. As an example, the guard period may be configured by considering SRS resources transmitted in the same slot. In particular, when the UE is configured and/or instructed to transmit an aperiodic SRS configured to intra-slot antenna switching, the corresponding UE may transmit the SRS by using different transmission antennas for each designated SRS resource, and the guard period may be configured between respective resources.

Further, when the UE is configured with the SRS resource and/or the SRS resource set configured for the antenna switching usage through the higher layer signaling, the corresponding UE may be configured to perform the SRS transmission based on the UE capability related to the antenna switching. Here, the capability of the UE related to the antenna switching may be '1T2R', '2T4R', '1T4R', '1T4R/2T4R', '1T1R', '2T2R', '4T4R', etc. Here, 'mTnR' may mean a UE capability supporting m transmissions and n receptions.

(Example S1) For example, in the case of a UE that supports 1T2R, up to two SRS resource sets may be configured as different values for resourceType of a higher layer parameter SRS-ResourceSet. Here, each SRS resource set may have two SRS resources transmitted in different symbols, and each SRS resource may constitute a single SRS port in a given SRS resource set. Further, an SRS port for a second SRS resource in the SRS resource set may be configured to be associated with a different UE antenna port from an SRS port for a first SRS resource in the same SRS resource set.

(Example S2) As another example, in the case of a UE that supports 2T4R, up to two SRS resource sets may be configured as different values for resourceType of the higher layer parameter SRS-ResourceSet. Here, each SRS resource set may have two SRS resources transmitted in different symbols, and each SRS resource may constitute a single SRS port in a given SRS resource set. Further, an SRS port pair for the second SRS resource in the SRS resource set may be configured to be associated with a different UE antenna port from the SRS port pair for the first SRS resource in the same SRS resource set.

(Example S3) As yet another example, in the case of a UE that supports 1T4R, the SRS resource sets may be configured in different schemes according to whether the SRS transmission is configured to be periodic, semi-persistent, and/or aperiodic. First, when the SRS transmission is configured to be periodic or semi-persistent, one SRS resource set constituted by 0 SRS resource set or four SRS resources configured based on for the resourceType of the higher layer parameter SRS-ResourceSet may be configured to be transmitted in different symbols. In this case, each SRS resource may constitute the single SRS port in the given SRS resource set, and the SRS port for each SRS resource may be configured to be associated with different UE antenna ports. Unlike this, when the SRS transmission is configured to be aperiodic, two SRS resource sets constituted by 0 SRS resource set or a total of four SRS resources configured based on for the resourceType of the higher layer parameter SRS-ResourceSet may be configured to be transmitted in different symbols of two different slots. In this case, the SRS ports for respective SRS resources in two given SRS resource sets may be configured to be associated with different UE antenna ports.

(Example S4) As still yet another example, in the case of the UE that supports 1T1R, 2T2R, or 4T4R, up to two SRS resource sets of which each is constituted by one SRS resource may be configured for the SRS transmission, and the number of SRS ports of each SRS resource may be configured to 1, 2, or 4.

If an indicated UE capability is 1T4R/2T4R, the corresponding UE may expect that SRS ports (e.g., 1 or 2) of the same number will be configured for all SRS resources in the SRS resource set(s). Further, when the indicated UE capability is 1T2R, 2T4R, 1T4R, or 1T4R/2T4R, the corresponding UE may not expect that one or more SRS resource sets configured for the antenna switching usage in the same slot will be configured or triggered. Further, even when the indicated UE capability is 1T1R, 2T2R, or 4T4R, the corresponding UE may not expect that one or more SRS resource sets configured for the antenna switching usage in the same slot will be configured or triggered.

### < SRS enhancement in Rel-17 MIMO >

The importance of UE SRS transmission for securing UL and DL channel estimation performance in an NR TDD system has increased. Accordingly, standardization was carried out in Rel-17 MIMO with the following three goals:

First, standardization was carried out with the goal of more flexibly controlling aperiodic SRS transmission according to the DL and UL slot ratios and traffic conditions of various TDD systems.

Second, an NR UE supporting DL rank 8 transmission must be equipped with at least 8 receiving antennas, but an SRS antenna change transmission technique for estimating DL channels based on channel reciprocity in the NR TDD system only supports up to a UE with up to receiving antennas-. Therefore, Rel-17 was standardized with the goal of supporting SRS antenna change transmission techniques for a UE equipped with more than four receiving antennas.

Third, standardization was carried out for the purpose of increasing the transmission coverage of the SRS and increasing the capacity of the SRS considering simultaneous access of multiple UEs.

### More flexible aperiodic SRS transmission trigger technique

FIG. 2 illustrates flexible aperiodic SRS transmission timing control.

In Rel-17 MIMO, two following techniques are standardized in order to more flexibly control aperiodic SRS transmission according to the DL and UL slot ratios and traffic conditions of various TDD systems.

First, a technique is introduced to dynamically control a slot offset value for an aperiodic SRS transmission trigger via the DCI. This is to solve a problem that SRS transmission may be significantly delayed depending on the DL and UL slot configurations because the existing slot offset value is fixed semi-persistently.

To this end, a new DCI field is defined that specifies one of a plurality of slot offset values set in the RRC message. In addition, the slot offset value indicated through the DCI field is standardized to be calculated based on available slots defined as slots composed of uplink slots and flexible symbols, thereby enabling flexible SRS transmission triggering with a small number of slot offset candidate values.

Second, a technique of trigger aperiodic SRS transmission without accompanying UL data transmission and CSI reporting is introduced. According to the existing scheme, in the SRS transmission, the SRS may be triggered together with the SRS through UL DCI only when PUSCH is allocated to trigger UL data and/or CSI reporting. It is difficult for the BS to estimate the UL/DL channel by triggering the SRS for the UE in a situation where there is no UL data to be transmitted and aperiodic CSI reporting is not required. This technique is intended to solve the problems described above.

### SRS antenna change transmission for UE equipped with more than 4 receiving antennas

As described above, the SRS antenna change transmission technique supported in the Rel-15/16 NR system only considers the UE equipped with four receiving antennas. In Rel-17 MIMO, the SRS antenna change transmission method for UEs equipped with 6 receiving antennas and 8 receiving antennas is standardized. The extended antenna change transmission method supports the following combinations of the number of Nt transmitting antennas and the number of Nr receiving antennas.

UE with Nr = 6: Nt=1 and Nt=2, UE with Nr = 8: Nt=1, Nt=2, and Nt=4
The above SRS transmission may be transmitted within one slot, or across two or four slots.

### SRS coverage and capacity enhancement technique

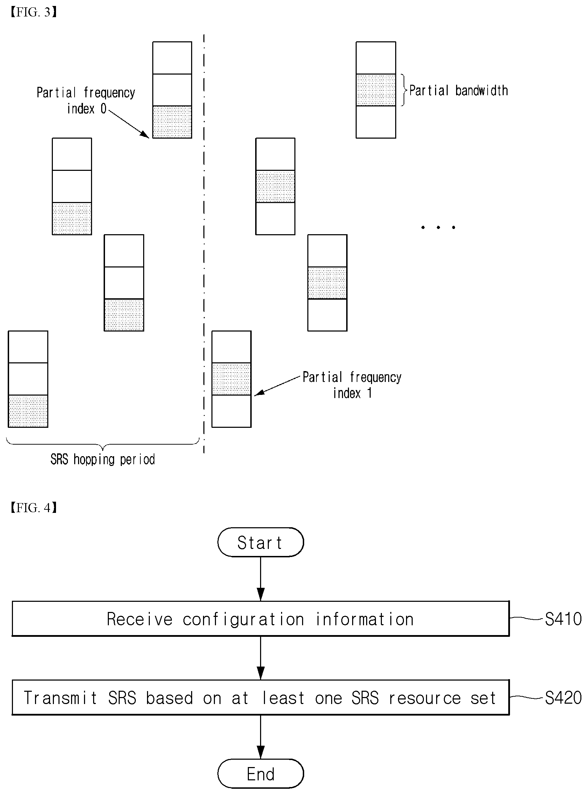

FIG. 3 illustrates partial band SRS transmission.

In order to increase the coverage and capacity of the SRS in Rel-17 MIMO, three major techniques were introduced.

First, the maximum number of transmission repetitions of the SRS is increased so that the SRS may be used in a system requiring wider coverage. In Rel-15 and Rel-16, the SRS may be repeatedly transmitted in up to four symbols within one slot, except for positioning purposes. In Rel-17 MIMO, the SRS may be repeatedly transmitted in up to 14 symbols within the slot in order to secure wider SRS coverage. Specifically, it is possible to transmit the SRS in 8, 10, 12 or 14 consecutive symbols within the slot.

Second, the SRS may only be transmitted in a partial band. To this end, the BS may configure a resource block location and an SRS transmission band for starting SRS transmission to the UE. For SRS transmission, the frequency location may also be hopped or fixed according to set rules according to an SRS frequency hopping cycle. The introduction of this technique increased the capacity of SRS by allowing different UEs to transmit the SRS to the same BS simultaneously in different partial bands.

Last, an SRS having a lower frequency density is supported. Except for positioning in Rel-15/16, the frequency density of the supported SRS is 1 RE per 2 RE or 1 RE per 4 RE. Accordingly, stable channel estimation performance may be secured in a frequency selective channel environment, but there was a limit to securing the SRS capacity. Therefore, in Rel-17 MIMO, an additional transmission technique was introduced to transmit the SRS in 1 RE per 8 RE, thereby enabling further increase of the SRS capacity in a frequency non-selective channel environment.

In NR Rel-15 MIMO, SRS may be used for UL link adaptation usage (codebook/non-codebook), beam management usage, and DL CSI acquisition (antenna switching) usage. In Rel-17 FeMIMO, standardization was carried out to increase the number of repetitions, introduce RPFS (RB-level Partial Frequency Sounding), and support comb value 8 in order to improve the coverage and capacity of SRS.

In Rel-18, SRS has also been standardized to support 8-port transmission, considering UEs capable of 8 Tx transmission. Comb offset hopping and cyclic shift hopping have been introduced to improve the capacity and the interference randomization performance of SRS.

As below, SRS enhancement for a UE with 3 Tx antennas is going to be performed in Rel-19.

*"Specify non-coherent UL codebook to facilitate 3-antenna-port codebook-based transmissions, without enhancement on UL full power transmission and without enhancement on SRS resource*
*Note: UL full power transmission mode 1 and 2 are not supported."*

The SRS, which is an uplink reference signal, has been used for DL CSI acquisition using channel reciprocity in a TDD environment in addition to its original purpose of UL link adaptation since the LTE standard. "Antenna switching," which is one of four "usages" of SRS in NR, is used for the DL CSI acquisition. In an actual market UE, there are many implementations where the number of Tx chains and the number of Rx chains are asymmetrical to reduce costs (e.g., the number of Rx chains including Rx antennas > the number of Tx chains). In order to perform sounding across a large number of Rx antennas using a small number of Tx chains, the SRS antenna switching operation through RF switching has been standardized (see the SRS for 'antennaSwitching'). The SRS antenna switching operation has been enhanced to xT6R/xT8R configuration for a UE with more than 4 Rx antennas in Rel-17 and to 8T8R configuration for 8Tx UE in Rel-18. In Rel-18, SRS enhancement for 3 Tx UE is going to be performed. There is a need for discussion on how SRS antenna switching of 3 Tx UE will be performed.

The following proposes a method of newly introducing 3 Tx SRS antenna switching by extending/enhancing the existing SRS antenna switching configuration and a method of introducing 3 Tx SRS antenna switching by combining the existing SRS antenna switching configuration (by performing only minimal enhancement).

Based on this background, the present disclosure proposes a method of configuring SRS antenna switching considering 3 Tx UE of a base station and a subsequent UE antenna switching SRS transmission operation.

In the present disclosure, '/' means 'and', 'or', or 'and/or' based on the context.

In the present disclosure, the following methods may be considered to support 3-port SRS resources.
Alt 1. Method of configuring/indicating, for 3-port resource, some three cyclic shift (CS) values of four CS values configured for legacy 4-port SRS resource
Alt 2. Method of configuring/indicating, for 3-port resource, some three comb values of four comb values configured for legacy 4-port SRS resource
Alt 3. Method of configuring/indicating, for 3-port resource, some three comb/CS values of two comb values and two CS values (total of four comb/CS values) configured for legacy 4-port SRS resource
Alt 4. Method of newly defining 3-port SRS resource and assigning three CS values to three ports of the 3-port SRS resource
Alt 5. Method of newly defining 3-port SRS resource and assigning three comb values to three ports of the 3-port SRS resource
Alt 6. Method of configuring 3-port SRS resource by combining legacy 2-port SRS resource and 1-port SRS resource or configuring 3-port SRS resource by combining three legacy 1-port SRS resources

Hereinafter, SRS resource transmission may mean SRS transmission on an SRS resource. Hereinafter, it is assumed that a higher layer parameter 'usage' of an SRS resource set is set to 'antennaSwitching'. Hereinafter, the port may be interpreted/replaced with an SRS port or an antenna port.

### Proposal 1

A method of introducing a new 3 Tx SRS antenna switching by extending/enhancing the existing SRS antenna switching configuration may be considered.
1) UE supporting 3T3R
   i. A base station may configure one SRS resource set including one 3-port SRS resource for a 3T3R supporting UE. The UE may perform sounding for 3 Rx antennas by transmitting the 3-port SRS resource without switching.
2) UE supporting 3T4R
   i. The base station may configure one SRS resource set including one 3-port SRS resource and one 1-port SRS resource for a 3T4R supporting UE. The 3-port SRS resource and the 1-port SRS resource may correspond to mutually exclusive SRS ports. The present disclosure describes the mutually exclusive SRS ports in detail below. The fact that two SRS resources correspond to mutually exclusive SRS ports may mean that SRS ports based on a first SRS resource (e.g., three SRS ports, ports 1000-1002) are different from SRS ports based on a second SRS resource (e.g., one SRS port, port 1003). For example, the base station may configure a Y gap symbol as shown in Table 2 between transmissions of the 3-port SRS resource and the 1-port SRS resource in consideration of the antenna switching time of the UE. For example, the base station may have to schedule the resources considering the Y gap symbol.
   ii. The base station may configure one SRS resource set including two 2-port SRS resources for the 3T4R supporting UE. The two 2-port SRS resources may correspond to mutually exclusive SRS ports. The base station may configure the Y gap symbol as shown in Table 2 between transmissions of the two 2-port SRS resources in consideration of the antenna switching time of the UE. For example, the base station may have to schedule the resources considering the Y gap symbol.
   iii. The base station may configure one SRS resource set including two 3-port SRS resources for the 3T4R supporting UE. The two 3-port SRS resources include two SRS port(s) in common, and the remaining one port of each resource may correspond to mutually exclusive SRS ports. The base station may configure the Y gap symbol as shown in Table 2 between transmissions of the two 3-port SRS resources in consideration of the antenna switching time of the UE. For example, the base station may have to schedule the resources considering the Y gap symbol.
3) UE supporting 3T6R
   i. The base station may configure one SRS resource set including two 3-port SRS resources for a 3T6R supporting UE. The two 3-port SRS resources may correspond to mutually exclusive SRS ports. The base station may configure the Y gap symbol as shown in Table 2 between transmissions of the two 3-port SRS resources in consideration of the antenna switching time of the UE. For example, the base station may have to schedule the resources considering the Y gap symbol.
4) UE supporting 3T8R
   i. The base station may configure one SRS resource set including two 3-port SRS resources and one 2-port SRS resource for a 3T8R supporting UE. Among the three resources, the first 3-port SRS resource, the second 3-port SRS resource, and the 2-port SRS resource may correspond to mutually exclusive SRS ports. The base station may configure the Y gap symbol as shown in Table 2 between transmissions of the three resources in consideration of the antenna switching time of the UE. For example, the base station may have to schedule the resources considering the Y gap symbol.
   ii. The base station may configure one SRS resource set including four 2-port SRS resources for a 3T8R supporting UE. The four 2-port SRS resources may correspond to mutually exclusive SRS ports. The base station may configure the Y gap symbol as shown in Table 2 between transmissions of the four 2-port SRS resources in consideration of the antenna switching time of the UE. For example, the base station may have to schedule the resources considering the Y gap symbol.

In the proposal 1, the 3-port SRS resource may include one or multiple SRS resources.

In the proposal 1, assuming that 3 Tx SRS resources are defined, a method of configuring SRS antenna switching for a 3 Tx UE using the 3 Tx SRS resources is proposed. By newly defining SRS antenna switching configuration for the 3 Tx UE, the UE is configured only the minimum resources from the base station. The UE may simply perform the 3 Tx SRS antenna switching operation (with reduced delay) by utilizing the configured resources. In addition, if there is an SRS port commonly included in different SRS resource transmissions, as in iii of 2) above, it can be helpful in correcting a phase errors, etc. when the different SRS resources are transmitted with a time difference in the time domain.

### Proposal 2

A method of introducing 3 Tx SRS antenna switching by combining existing SRS antenna switching configurations (with only minimal enhancement) may be considered.
1) UE supporting 3T3R
   i. A base station may configure one 2-port SRS resource and one 1-port SRS resource for a 3T3R supporting UE. The two resources may be included in one SRS resource set or may be respectively included in two SRS resource sets. The 2-port SRS resource and the 1-port SRS resource may correspond to mutually exclusive SRS ports. Since the UE supporting 3T3R is a UE capable of simultaneously transmitting 3 Tx antennas, the UE may perform an operation of i) or ii). i) The 2-port SRS resource and the 1-port SRS resource may be transmitted simultaneously (using the same time/frequency resources). ii) The 2-port SRS resource and the 1-port SRS resource may be concatenated (at symbol-level) and transmitted without configuring a Y gap symbol between transmissions of the 2-port SRS resource and the 1-port SRS resource.
   ii. Similar to the clause i, the base station may configure three 1-port SRS resources for the 3T3R supporting UE. The three resources may be included in one SRS resource set or may be respectively included in three SRS resource sets. The UE may perform an operation of i) or ii). i) The three 1-port SRS resources may be transmitted simultaneously (using the same time/frequency resources). ii) The three 1-port SRS resources may be concatenated (at symbol-level) and transmitted without configuring the Y gap symbol between transmissions of the three 1-port SRS resources.
   iii. The base station may configure one SRS resource set including two 2-port SRS resources for the 3T3R supporting UE. The two resources may be included in one SRS resource set or may be respectively included in two SRS resource sets. The two 2-port SRS resources include one SRS port(s) in common, and the remaining one port of each resource may correspond to mutually exclusive SRS ports. The UE may perform an operation of i) or ii). i) The two 2-port SRS resources may be transmitted simultaneously (using the same time/frequency resources). ii) The two 2-port SRS resources may be concatenated (at symbol-level) and transmitted without configuring the Y gap symbol between transmissions of the two 2-port SRS resources.
2) UE supporting 3T4R
   i. The base station may configure two 2-port SRS resources for a 3T4R supporting UE. The two resources may be included in one SRS resource set or may be respectively included in two SRS resource sets. The two 2-port SRS resources may correspond to mutually exclusive SRS ports. The base station may configure the Y gap symbol as shown in Table 2 between transmissions of the two 2-port SRS resources in consideration of the antenna switching time of the UE. For example, the base station may have to schedule the resources considering the Y gap symbol.
   ii. Similar to the clause i, the base station may configure four 1-port SRS resources for the 3T4R supporting UE. The four resources may be included in one SRS resource set, or the three resources and the one resource may be split into two SRS resource sets. The UE may perform an operation of i) or ii). i) The three resources (belonging to the same SRS resource set) among the four 1-port SRS resources may be transmitted simultaneously (using the same time/frequency resources). ii) The three resources may be concatenated (at symbol-level) and transmitted without configuring the Y gap symbol between transmissions of the three resources.
   iii. Similar to the clause i, the base station may configure one 2-port SRS resource and two 1-port SRS resources for the 3T4R supporting UE. The three resources may be included in one SRS resource set, or the two resources and the one resource may be split into two SRS resource sets. The UE may perform an operation of i) or ii). i) The two resources (belonging to the same SRS resource set) among the three resources may be transmitted simultaneously (using the same time/frequency resources). ii) The two resources may be concatenated (at symbol-level) and transmitted without configuring the Y gap symbol between transmissions of the two resources.
3) UE supporting 3T6R
   i. The base station may configure three 2-port SRS resources for a 3T6R supporting UE. The three resources may be included in one SRS resource set or may be respectively included in three SRS resource sets. The three 2-port SRS resources may correspond to mutually exclusive SRS ports. The base station may configure the Y gap symbol as shown in Table 2 between transmissions of the three 2-port SRS resources in consideration of the antenna switching time of the UE. For example, the base station may have to schedule the resources considering the Y gap symbol.
   ii. The base station may configure six 1-port SRS resources for the 3T6R supporting UE. The six resources may be included in one SRS resource set or may include three resources in each of two SRS resource sets. The UE may perform an operation of i) or ii). i) The three resources (belonging to the same SRS resource set) among the six 1-port SRS resources may be transmitted simultaneously (using the same time/frequency resources). ii) The three resources may be concatenated (at symbol-level) and transmitted without configuring the Y gap symbol between transmissions of the three resources.
4) UE supporting 3T8R
   i. The base station may configure four 2-port SRS resources for a 3T8R supporting UE. The four resources may be included in one SRS resource set or may be respectively included in four SRS resource sets. The four 2-port SRS resources may correspond to mutually exclusive SRS ports. The base station may configure the Y gap symbol as shown in Table 2 between transmissions of the four 2-port SRS resources in consideration of the antenna switching time of the UE. For example, the base station may have to schedule the resources considering the Y gap symbol.
   ii. The base station may configure eight 1-port SRS resources for the 3T8R supporting UE. The eight resources may be included in one SRS resource set, or may include three or two SRS resources in each of three SRS resource sets. For example, first and second SRS resource sets may include three SRS resources, and a third SRS resource set may include two SRS resources. The UE may perform an operation of i) or ii). i) The two or three resources (belonging to the same SRS resource set) among the eight 1-port SRS resources may be transmitted simultaneously (using the same time/frequency resources). ii) The two or three resources may be concatenated (at symbol-level) and transmitted without configuring the Y gap symbol between transmissions of the two or three resources.

The proposal 2 proposes a method of configuring one or more 4-port SRS resources as SRS resource configurations for supporting 3TyR UEs. As a specific example, the base station may configure two 4-port SRS resources for a UE supporting 3T6R and schedule the two resources in a TDM format. A method of transmitting only resources corresponding to three ports when each 4-port SRS resource is transmitted by the UE may be considered. For example, since the two SRS resources correspond to different SRS ports, it may be necessary to configure the Y gap symbol between the two resources in consideration of the antenna switching time. For example, since three ports are transmitted from each of the two 4-port SRS resources, sounding for 6 Rx antennas may be performed in the 3T6R configuration. Examples related to SRS transmission based on three ports of four ports are described in detail below.

According to an embodiment, the UE may select three ports (e.g., ports 1000-1002) in ascending/descending order from a lowest/highest port index of 4-port SRS resource and transmit SRS. As an example of ascending order of the port indices, the UE may transmit SRS based on three ports (e.g., ports 1000-1002) among four ports (e.g., ports 1000-1003). As an example of descending order of the port indices, the UE may transmit SRS based on three ports (e.g., ports 1003, 1002, 1001) among four ports (e.g., ports 1000-1003). In other words, in the above examples, the remaining one port (e.g., port 1003 or port 1000) except for the three ports determined in ascending/descending order of the port indices may be muted or disabled.

According to an embodiment, the UE may select three ports in ascending/descending order from a lowest/highest value among CS values of the 4-port SRS resource and transmit SRS.

According to an embodiment, the UE may select three ports in ascending/descending order from a lowest/highest value (in a frequency domain) among comb values of the 4-port SRS resource and transmit SRS.

According to an embodiment, the UE may select three ports among two comb values and two CS values of the 4-port SRS resource and transmit SRS.

According to an embodiment, the base station may configure one 4-port SRS resource for the UE supporting 3T3R. The UE may transmit only resources (e.g., symbols) corresponding to three ports based on the determined rule. More specifically, the UE may transmit SRS based on symbol(s) related to three ports among symbols based on the 4-port SRS resource.

According to an embodiment, the base station may configure three 4-port SRS resources for the UE supporting 3T8R. For specific two 4-port SRS resources, the UE may transmit only resources corresponding to three ports based on the determined rule (e.g., ascending/descending order of port indices). For the remaining one 4-port SRS resource, the UE may transmit only the resources corresponding to 2 ports by applying the determined rule.

The above embodiments are methods for enabling SRS antenna switching of the 3 Tx UE by using/utilizing only some ports of the 4-port SRS resource. According to the embodiments, there is an advantage of enabling 3 Tx SRS antenna switching without the need to separately define the 3-port resource. In addition, there is an advantage in that resources related/corresponding to ports not used/utilized by the UE in the 4-port SRS resource can be utilized for SRS scheduling of other UEs.

According to the proposal 2, the SRS resource configuration for the existing 1TyR/2TyR is utilized/extended without utilizing the 3Tx SRS resource (3-port SRS resource). Specifically, the proposal 2 proposes an SRS antenna switching configuration method for the 3 Tx UE through a combination of the legacy configuration methods. There is an advantage in that the 3 Tx SRS antenna switching operation of the UE can be supported by utilizing the existing RRC parameters without the need to newly define the SRS antenna switching configuration for the 3 Tx UE. However, more than one SRS resource configurations may be required for a specific 3TyR operation. In addition, as in the iii) of 1) above, if there is an SRS port commonly included in different SRS resource transmissions, it can be helpful in correcting a phase error, etc. when the different SRS resources are transmitted with a time difference in the time domain.

### Proposal 3

A method of performing SRS antenna switching configuration corresponding to a subset of a specific SRS UE capability report (e.g., xTyR) of a UE may be considered.

An existing operation based on a UE capability (e.g., xTyR) related to antenna switching is first described. The UE capability of 'xTyR' represents that the UE is capable of SRS transmission on x ports based on y antennas. The y antennas are based on all or a subset of UE receive antennas.

After the Rel-15 SRS antenna switching standardization, a new antenna switching capability has been added in the Rel-16 standardization to enable the base station to configure xTyR less than the number of Tx antennas of the UE even though the UE supports 2T2R, 2T4R, and 4T4R for more than 2 Tx UEs (i.e., supportedSRS-TxPortSwitch-v1610). This is in consideration of flexibility for base station configuration and UE power saving. An operation based on the UE capability (UE sounding procedure) and higher layer parameters related to the corresponding UE capability (see Table 3) are described below.

A UE sounding procedure for DL CSI acquisition is as follows.

When the UE is configured with the higher layer parameter *usage* in *SRS-ResourceSet* set as 'antennaSwitching', the UE may be configured with only one of the following configurations depending on the indicated UE capability *supportedSRS-TxPortSwitch* ('t1r2' for 1T2R, 't1r1-t1r2' for 1T=1R/1T2R, 't2r4' for 2T4R, 't1r4' for 1T4R, 't8r8' for 8T8R, 't1r1-t1r2-t1r4' for 1T=1R/1T2R/1T4R, 't1r4-t2r4' for 1T4R/2T4R, 't1r1-t1r2-t2r2-t2r4' for 1T=1R/1T2R/2T=2R/2T4R, 't1r1-t1r2-t2r2-t1r4-t2r4' for 1T=1R/1T2R/2T=2R/1T4R/2T4R, 't1r1' for 1T=1R, 't2r2' for 2T=2R, 't1r1-t2r2' for 1T=1R/2T=2R, 't4r4' for 4T=4R, or 't1r1-t2r2-t4r4' for 1T=1R/2T=2R/4T=4R). Or, the UE may be configured with only one of the following configurations depending on the indicated UE capability *supportedSRS-TxPortSwitchBeyond4Rx* ('t1r1' for 1T=1R, 't2r2' for 2T=2R, 't1r2' for 1T2R, 't4r4' for 4T=4R, 't2r4' for 2T4R, 't1r4' for 1T4R, 't2r6' for 2T6R, 't1r6' for 1T6R, 't4r8' for 4T8R, 't2r8' for 2T8R, 't1r8' for 1T8R). Here, the above configurations mean the configuration of SRS resource set/SRS resource defined for each UE capability, as in the examples S0 to S4 described above. As an example of 4T8R, 0, 1, or 2 SRS resource sets may be configured to the UE. Each SRS resource set has two SRS resources transmitted in different symbols. Each SRS resource of a given set includes four SRS ports. The SRS ports of the resources in the set are associated with different UE antenna ports.

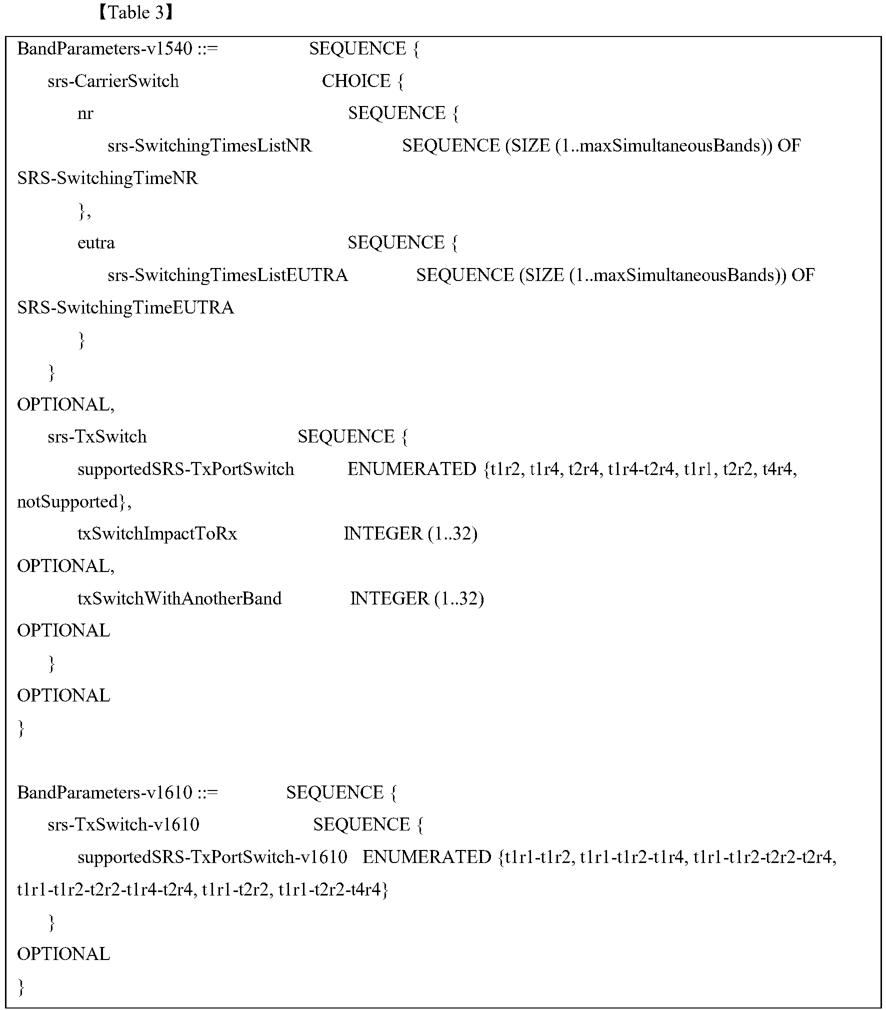

In the 3TyR configuration that the 3Tx UE can support (e.g., SRS resource/SRS resource set configuration for 3T6R), a UE capability reporting method for a subset configuration corresponding/related to a lower capability than the corresponding configuration is described in detail below.
1) A UE supporting 3T3R may report the following capability combination (at least one of candidates) for the subset configuration in the SRS antenna switching capability related to the 3 Tx UE.
   i. {1T1R, IT2R, 1T3R, 2T2R, [2T3R], 3T3R}
2) A UE supporting 3T4R may report the following capability combination (at least one of candidates) for the subset configuration in the SRS antenna switching capability related to the 3 Tx UE.
   i. {1T1R, IT2R, [IT3R], IT4R, 2T2R, [2T3R], 2T4R, 3T3R, 3T4R}
3) A UE supporting 3T6R may report the following capability combination (at least one of candidates) for the subset configuration in the SRS antenna switching capability related to the 3 Tx UE.
   i. {1T1R, IT2R, [IT3R], IT4R, IT6R, 2T2R, [2T3R], 2T4R, 2T6R, 3T3R, 3T4R, 3T6R}
4) A UE supporting 3T8R may report the following capability combination (at least one of candidates) for the subset configuration in the SRS antenna switching capability related to the 3 Tx UE.
   i. {1T1R, 1T2R, [1T3R], 1T4R, 1T6R, 1T8R, 2T2R, [2T3R], 2T4R, 2T6R, 2T8R, 3T3R, 3T4R, 3T6R, 3T8R}

### Problem 1

The reason why it was decided to standardize the transmission/reception method for supporting the 3 Tx UE in the current Rel-18 MIMO is because of market usage. Specifically, the maximum number of Tx antennas supported by UEs currently distributed in the market is 2, and there is not enough space to infinitely increase the number of Tx antennas in hand-held UEs. As described above, the development of UEs equipped with three Tx antennas is realistic, but the number of UE Tx antennas supported in the standard is only 1/2/4/8. For the above reasons, standardization for supporting UEs with three Tx antennas has been conducted. Here, the Tx antenna and Tx chain structure for hand-held UEs may be limited. For example, some of the three antennas may share an RF chain including a power amplifier. For example, RF switching for antenna switching may not be possible between a specific antenna and some antenna of the three antennas (because transmission panels are different or physically separated). The following proposal 4 proposes a technique to operate 3 Tx SRS antenna switching under these structural limitations.

### Proposal 4

In a 3 Tx UE, a method of supporting 3 Tx SRS antenna switching may be considered when an RF chain is shared between a specific antenna and some antennas.
1) In a 3 Rx antenna UE, a UE in which two Tx/Rx antennas share an RF chain and an independent RF chain is implemented in remaining one Tx/Rx antenna
   i. 3T3R configuration
      - A base station may configure 2-port SRS resource and 1-port SRS resource for a 3T3R supporting UE similar to i of 1) in the proposal 2 (when receiving from the UE a report that specific antennas share the RF chain on UE implementation). The 3T3R supporting UE is a UE that can simultaneously perform transmissions based on 3 Tx antennas. The UE may perform an operation of i) or ii). i) The 2-port SRS resource and the 1-port SRS resource may be transmitted simultaneously (using the same time/frequency resources). ii) The 2-port SRS resource and the 1-port SRS resource may be concatenated (at symbol-level) and transmitted without configuring a Y gap symbol between transmissions of the 2-port SRS resource and the 1-port SRS resource.
   ii. 2T3R configuration
      - The base station may configure 2-port SRS resource and 1-port SRS resource for a 2T3R supporting UE (when receiving from the UE a report that specific antennas share the RF chain on UE implementation). The 2-port SRS resource and the 1-port SRS resource correspond to mutually exclusive SRS ports. The 2-port SRS resource may be mapped with 2-port related/corresponding to two Tx/Rx antennas that share the RF chain. The base station may configure the Y gap symbol as shown in Table 2 between transmissions of the 2-port SRS resource and the 1-port SRS resource in consideration of antenna switching time of the UE. For example, the base station may have to schedule the resources considering the Y gap symbol.
         Or/and, the 2-port SRS resource and the 1-port SRS resource correspond to mutually exclusive SRS ports. The 2-port SRS resource may be mapped with 2-port related/corresponding to one of the two Tx/Rx antennas sharing the RF chain and the remaining one Tx/Rx antenna including an independent RF chain. In this case, since antenna switching is not required between the 2-port SRS resource and the 1-port SRS resource (since 1 port of the 2-port resource and 1 port of the 1-port resource share the RF chain), the two SRS resources may be concatenated (at symbol-level) and transmitted without configuring the Y gap symbol between transmissions of the two SRS resources.
      - (Alternatively,) The base station may configure three 1-port SRS resources for a 2T3R supporting UE (when receiving from the UE a report that specific antennas share the RF chain on UE implementation). The three 1-port SRS resources correspond to mutually exclusive SRS ports. A gap symbol configuration may not be required between transmissions of 1-port SRS resources related to two Tx/Rx antennas sharing the RF chain (since the UE can simultaneously transmit two antennas). In addition/or, the 1-port SRS resources related to the two Tx/Rx antennas sharing the RF chain may be transmitted simultaneously (using the same time/frequency resources). On the other hand, the base station may configure the Y gap symbol as shown in Table 2 between transmission of the 1-port SRS resource related to the two Rx antennas and transmission of the 1-port SRS resource related to the remaining one Tx/Rx antenna in consideration of antenna switching time of the UE. For example, the base station may have to schedule the resources considering the Y gap symbol.
   iii. 1T3R configuration
      The base station may configure three 1-port SRS resources for a 1T3R supporting UE (when receiving from the UE a report that specific antennas share the RF chain on UE implementation). The three 1-port SRS resources correspond to mutually exclusive SRS ports. A gap symbol configuration may not be required between transmissions of 1-port SRS resources related to two Tx/Rx antennas sharing the RF chain (since the UE is capable of simultaneous transmission based on two antennas). In addition/or, the 1-port SRS resources related to the two Tx/Rx antennas sharing the RF chain may be transmitted simultaneously (using the same time/frequency resources). On the other hand, the base station may configure the Y gap symbol as shown in Table 2 between transmission of the 1-port SRS resource related to the two Rx antennas and transmission of the 1-port SRS resource related to the remaining one Tx/Rx antenna in consideration of antenna switching time of the UE. For example, the base station may have to schedule the resources considering the Y gap symbol.
2) In a 4 Rx antenna UE, a UE in which two Tx/Rx antennas share an RF chain and remaining two Tx/Rx antennas share the RF chain
   i. 3T4R configuration
      - The base station may configure two 2-port SRS resources for a 3T4R supporting UE (when receiving from the UE a report that specific antennas share the RF chain on UE implementation). The two 2-port SRS resources correspond to mutually exclusive SRS ports. Each 2-port SRS resource may be mapped with 2-port related/corresponding to one of the first two Tx/Rx antennas sharing the RF chain and one of the second two Tx/Rx antennas sharing the RF chain. In this case, since antenna switching is not required between the two 2-port SRS resources (since each of two ports of the 2-port SRS resource and each of two ports of other 2-port SRS resource share the RF chain), the two 2-port SRS resources may be concatenated (at symbol-level) and transmitted without configuring the Y gap symbol between transmissions of the two 2-port SRS resources.
   ii. 2T4R configuration
      - The base station/UE operation may be performed in the same manner as the i.
   iii. 1T4R configuration
      - The base station may configure four 1-port SRS resources for a 1T4R supporting UE (when receiving from the UE a report that specific antennas share the RF chain on UE implementation). The four 1-port SRS resources correspond to mutually exclusive SRS ports. A gap symbol configuration may not be required between transmissions of 1-port SRS resources related to two Tx/Rx antennas sharing the RF chain (since the UE can simultaneously transmit two antennas). In addition/or, the 1-port SRS resources related to the two Tx/Rx antennas sharing the RF chain may be transmitted simultaneously (using the same time/frequency resources). On the other hand, the base station may configure the Y gap symbol as shown in Table 2 between transmission of the 1-port SRS resource related to the two Rx antennas sharing the RF chain and transmission of the 1-port SRS resource related to the remaining two Tx/Rx antennas sharing the RF chain in consideration of antenna switching time of the UE. For example, the base station may have to schedule the resources considering the Y gap symbol.
3) Similar to the operations of the 1) and 2), 3 Tx SRS antenna switching of 6 Rx/8 Rx antenna UE may be performed. For example, transmissions of multiple SRS resources related to Tx/Rx antennas sharing a Tx chain may be concatenated (at symbol-level) and transmitted without configuring a Y gap symbol between the transmissions of the multiple SRS resources, or the multiple SRS resources may be transmitted simultaneously (using the same time/frequency resources).

In the proposal 4, multiple SRS resources related to ports sharing the same RF chain may be included in a specific SRS resource set. Or/and, a connection relationship may be configured/defined between multiple SRS resources related to ports sharing the same RF chain via signaling (such as RRC/MAC-CE). More specifically, if SRS resources are included in different SRS resource sets or the connection relationship is not configured between SRS resources, it may mean that ports related to the SRS resources are related to different RF chains (not sharing the RF chain) and a Y gap symbol configuration is necessary between transmissions of the SRS resources.

The proposal 4 utilizes the fact that Y gap symbol is not required between multiple SRS resources for antenna switching in a specific UE implementation, or that the multiple SRS resources can be transmitted simultaneously. According to the proposal 4, there is an advantage that the delay required for the UE to complete transmission of a specific antenna switching configuration can be reduced.

### Problem 2

In the above proposals, it may be assumed that SRS resources with different numbers of ports are TDMed and transmitted. For example, 1-port SRS resource and 2-port SRS resource may be TDMed and transmitted. For example, 2-port SRS resource and 3-port SRS resource may be TDMed and transmitted.

According to an SRS power control operation described below, SRS transmit power is determined based on an SRS transmission occasion, and (linear power value) is equally split for each port in the SRS transmission occasion. Hence, a power imbalance problem may occur in which the power of respective Rx antennas that perform the sounding for antenna switching is not constant. For example, it may be assumed that 1-port SRS resource and 2-port SRS resource are TDMed and transmitted for antenna switching transmission for 3 Rx antennas. For the 1-port SRS resource, P_SRS,b,f,c is determined by a power control parameter configured for an SRS resource set to which the 1-port SRS resource is configured, and the UE transmits the SRS using the determined value (without splitting since it is the 1-port resource). On the other hand, for the 2-port SRS resource, P_SRS,b,f,c (same as the set) is determined by teh power control parameter configured for the SRS resource set to which (same as the set) to which the 2-port SRS resource is configured. A value corresponding to half of a linear value of the determined value is allocated to each port. Accordingly, the power imbalance problem occurs. Proposal 5 proposes a method to solve the problem 2.

The existing operation related to the transmit power of the SRS is first described.

For SRS,
- If a UE is provided TDM for an SRS resource with 8 ports in an SRS resource set with usage 'codebook' or 'antennaSwitching', the UE splits a linear value *P̂*_{SRS,*b*,*f*,*c*}(*i*, *qₛ, l*) of the transmit power *P*_{SRS,*b*,*fc*}(*i*, *qₛ, l*) on active UL BWP b of carrier f of serving cell c equally across the configured antenna ports on each symbol for SRS transmission.
- Else, a UE splits a linear value *P̂*_{SRS,*b*,*f*,*c*}(*i*, *qₛ, l*) of the transmit power *P̂*_{SRS,*b*,*f*,*c*}(*i*, *qₛ, l*) on active UL BWP b of carrier f of serving cell c equally across the configured antenna ports for SRS.

If a UE transmits SRS based on a configuration by SRS-ResourceSet on active UL BWP b of carrier f of serving cell c using SRS power control adjustment state with index *l,* the UE determines the SRS transmission power *P̂*_{SRS,*b*,*f*,*c*}(*i*, *qₛ, l*) in SRS transmission occasion i as.${P}_{SRS , b , f , c} \left(i, {q}_{s}, l\right) = min \left\{\begin{matrix}{P}_{CMAX , f , c} \left(i\right) , \\ {P}_{O _ SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right)\end{matrix}\right\}$ [dbm]

### Proposal 5

If SRS resources with different numbers of ports are TDMed and transmitted (for 3 Tx SRS antenna switching), a method to solve the power imbalance problem of the problem 2 is described below.
1) Embodiment 1: SRS resources which are TDMed and transmitted may be assumed as a single SRS transmission occasion. For example, a UE may assume multiple SRS resources for transmission based on a specific single antenna switching configuration (e.g., xTyR configuration) or/and 3-port SRS transmission (configured for 3-port transmission), as a single SRS transmission occasion. Or/and the assumption for the single SRS transmission occasion may be agreed/specified between the base station and the UE. For example, if 2-port SRS resource and 1-port SRS resource are utilized for 3T3R antenna switching transmission, (the corresponding resources are included in the same SRS resource set, and) P_SRS,b,f,c values for the two SRS resources may be defined/determined for the single SRS transmission occasion *i*. (Linear values of) the P_SRS,b,f,c value may be equally split for 2-port + 1-port = 3-port.
2) Embodiment 2: A power split method for each SRS port, which is the existing operation, can be extended and applied to solve the problem 2. Specifically, for multiple SRS resources for transmission based on a specific single antenna switching configuration (e.g., xTyR configuration) or/and 3-port SRS transmission (configured for 3-port transmission), the UE may equally split the transmit power per port. The SRS power control operation may be defined or configured by the base station. For example, the following BS/UE assumptions may be agreed/specified:
   - If a UE is provided [3port] for SRS resource(s) with 3 ports in an SRS resource set with usage 'codebook' or 'antennaSwitching', the UE splits a linear value *P̂*_{SRS,*b*,*f*,*c*}(*i*, *qₛ*, *l*) of the transmit power *P*_{SRS,*b*,*f*,*c*}(*i*, *qₛ*, *l*) on active UL BWP *b* of carrier *f* of serving cell *c* equally across the configured three antenna ports for SRS transmission).
   - The [3port] may be an example of configuration for at least one 3-port SRS resource(s). For example, provision of the [3port] to the UE may mean that parameters/information related to SRS transmission based on three ports are configured/indicated to the UE.
3) Embodiment 3: A UE may perform power allocation per SRS port by the following procedure.

Step 1: For each of multiple SRS resources for transmission based on a specific single antenna switching configuration (e.g., xTyR configuration) or/and 3-port SRS transmission (configured for 3-port transmission), the UE determines power for each SRS transmission occasion in the same manner as the existing.

Step 2: The UE calculates a minimum value P_min among the power per SRS port determined in the Step 1. The UE finally sets/applies the power per port of the multiple SRS resources to P_min.

Through the proposal 5, power is equally allocated to each SRS port related to antenna switching in SRS resources configured for a specific SRS antenna switching configuration, and thus the power imbalance problem can be solved.

In the proposals 1 to 4, the Y gap symbol may be a more increased value than the Y values in Table 2 based on a sub-carrier spacing. For example, as the sub-carrier spacing increases to 240/480/960 KHz, a separate Y value (proportionally increased) may be set/defined.

In the proposals 1 to 4, the fact that multiple SRS resources can be transmitted simultaneously (using the same time/frequency resources) may mean that the following operation i) or ii) is performed. i) The base station configures multiple SRS resources in the same symbol to the UE. In this instance, each SRS resource may be configured to have a different CS/Comb value (so as to correspond/map to mutually exclusive port(s)). ii) The base station configures multiple SRS resources in the same symbol to the UE. In this instance, each SRS resource may be configured to have a non-overlapped SRS PRB location. In the i), even if the multiple SRS resources are configured with the same FDRA parameters such as C_SRS, B_SRS, etc., the multiple SRS resources can be transmitted using (orthogonal/quasi-orthogonal) resources corresponding to different ports and thus can be transmitted without collision between the resources. Methods of the i) and ii) have an advantage that the base station can perform channel estimation for the multiple SRS ports based on a specific single symbol.

Embodiments of the proposals 1 to 5 may operate based on a specific combination.

A signaling procedure based on the above-described embodiments is described below.

An example of a UE (or base station) operation based on at least one of the above-described embodiments (e.g., at least one of the proposals 1 to 5) is as follows.
1) The UE (base station) receives (transmits) SRS related configuration information.
   The configuration information may include configuration for SRS resource(s) in a specific SRS resource set (of codebook or/and antennaSwitching usage) based on the proposals 1 to 5.
2) The UE (base station) transmits (receives) SRS based on P/SP/AP-SRS transmission configuration/activation/indication.

The UE transmits the SRS resource set (including one or more SRS resources) configured/activated/indicated via RRC/MAC CE/DCI based on the configuration of the proposals 1 to 5. Transmitting the SRS resource (set) means transmitting the SRS based on the SRS resource (set).

The UE allocates power per SRS port based on the proposal 5.

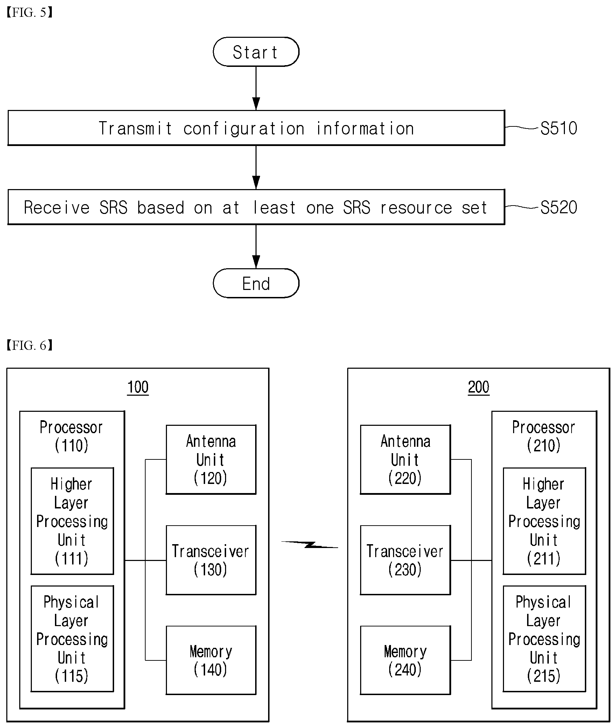

From an implementation perspective, the operations (e.g., operations based on at least one of the proposals 1 to 5) of the base station/UE according to the above-described embodiments may be processed by a device described below with reference to FIG. 6 (e.g., processors 110 and 210 of FIG. 6).

The operations (e.g., operations based on at least one of the proposals 1 to 5) of the base station/UE according to the above-described embodiments may be stored in a memory (e.g., memories 140 and 240 of FIG. 6) in the form of a command/program (e.g., instructions, executable codes) for running at least one processor (e.g., processors 110 and 210 of FIG. 6).

Below, the above-described embodiments are described in detail from a perspective of operations of the UE and the base station with reference to FIGS. 4 and 5. Methods described below are merely distinguished for convenience of explanation. Thus, as long as the methods are not mutually exclusive, it is obvious that partial configuration of any method can be substituted or combined with partial configuration of another method.

FIG. 4 is a flowchart illustrating a method according to an embodiment of the present disclosure.

Referring to FIG. 4, a method according to an embodiment of the present disclosure includes a step S410 of receiving configuration information and a step S420 of transmitting an SRS based on at least one SRS resosurce set.

In the step S410, a user equipment (UE) receives configuration information from a base station. At least one sounding reference signal (SRS) resource set related to antenna switching is configured based on the configuration information.

For example, the at least one SRS resource set may be based on SRS resource set(s) with higher layer parameter usage set as antennaSwitching.

For example, the configuration information may be based on SRS-Config of Table 1.

For example, the configuration information may include i) a list of one or more SRS resource sets (e.g., srs-ResourceSetToAddModList) and ii) a list of one or more SRS resources (e.g., srs-ResourceToAddModList). The SRS resource set may include at least one SRS resource. A configuration for the SRS resource set may include a list of SRS resource ID(s) representing the at least one SRS resource (e.g., srs-ResourceIdList).

For example, the configuration information may include information related to a configuration/operation based on at least one of the proposals 1 to 5 described above. As a specific example, the configuration information may include information related to the proposal 2. The configuration information may include information/parameters related to SRS transmission based on three ports of four ports. As a specific example, the configuration information may include information related to the proposal 5. The configuration information may include information related to determination of SRS transmit power based on the three ports.

In the step S420, the UE transmits to the base station the SRS based on the at least one SRS resource set.

For example, the SRS may be transmitted in different symbols based on multiple SRS resources in the at least one SRS resource set. As a specific example, the SRS may be transmitted in different symbols (e.g., two symbols) based on two SRS resources within one SRS resource set. As a specific example, the SRS may be transmitted in different symbols based on SRS resource(s) of each of the two SRS resource sets.

For example, the number of ports configured in each of the multiple SRS resources may be the same or different. As a specific example, the number of ports configured for a first SRS resource among two SRS resources (e.g., 1, 2, 4, or 8) may be the same as or different from the number of ports configured for a second SRS resource (e.g., 1, 2, 4, or 8).

For example, the number of ports configured in each of the multiple SRS resources may be the same. In this case, a power control operation may be performed in the same manner as the existing. The transmit power is equally split across the SRS ports based on one symbol (or each symbol of multiple symbols). Specifically, a linear value of the transmit power for the SRS may be equally split across ports of each SRS resource of each SRS resource set in the symbol.

When multiple SRS resources with different numbers of ports are transmitted in different symbols, a power imbalance problem as in the problem 2 described above may occur. Embodiments for solving the problem are described in detail below.

According to an embodiment, based on the number of ports configured in each of the multiple SRS resources being different, the transmit power related to each port of one of the multiple SRS resources may be the same. This embodiment may be based on the proposal 5.

The following description is made in detail assuming that the number of the multiple SRS resources is 2.

It may be assumed that the number of ports configured in a first SRS resource among two SRS resources is 4, and the number of ports configured in a second SRS resource is 2. The transmit power (or a linear value of the transmit power) related to each port of four ports of the first SRS resource may be the same as the transmit power (or a linear value of the transmit power) related to each port of two ports of the second SRS resource. In the above example, the number of ports (4, 2) of each SRS resource and the number (2) of the multiple SRS resources are assumed for convenience of explanation. It is obvious that even if the number of ports and the total number of SRS resources are different from the above example, it is included in the technical idea of the present embodiment.

According to the embodiment, even if the number of ports configured in each of the multiple SRS resources is the same or different, the transmit power (linear value of transmit power) for each port is equally controlled. Therefore, the operation related to the number of ports for each SRS resource may be described again as follows.

The number of ports configured in each of the multiple SRS resources is the same or different. The transmit power (or linear value of transmit power) related to each port of one of the multiple SRS resources may be the same. Based on the number of ports configured in each of the multiple SRS resources being different, the SRS transmit power may be determined based on one of the following embodiments.

According to an embodiment, the multiple SRS resources may be related to the same SRS transmission occasion. The transmit power for the SRS may be determined based on the same SRS transmission occasion. The present embodiment may be based on the embodiment 1 of the proposal 5.

According to an embodiment, the transmit power for the SRS may be equally split across the ports based on the multiple SRS resources in the different symbols. The present embodiment may be based on the embodiment 2 of the proposal 5.

According to an embodiment, among the transmit powers per port determined for the multiple SRS resources, the lowest transmit power may be applied to the ports of the multiple SRS resources. Hereinafter, a case where the number of the multiple SRS resources is 2 is described as an example. The transmit power may be determined for each of the first SRS resource and the second SRS resource. A linear value of the determined transmit power may be equally split across the ports of each of the first SRS resource and the second SRS resource. In this case, the transmit powers per port described above may be based on i) a linear value (a first value) of the transmit power split/allocated to one of the ports of the first SRS resource and ii) a linear value (a second value) of the transmit power split/allocated to one of the ports of the second SRS resource. A smallest value among the first value and the second value may be applied as the transmit power of each of the ports based on the two SRS resources. The present embodiment may be based on the embodiment 3 of the proposal 5.

An embodiment for UE capability related to antenna switching of the UE (e.g., 3Tx UE) is described below.

According to an embodiment, the at least one SRS resource set may be configured based on UE capability. The UE capability of 'xTyR' may represent that the UE is capable of SRS transmission on x ports based on y antennas. For example, the y antennas may be based on all or a subset of UE receive antennas.

According to an embodiment, based on the UE capability of '3TyR': each SRS resource in the at least one SRS resource set may include four antenna ports. Further, in each SRS resource, the SRS may be transmitted based on at least one antenna port of the four antenna ports. The present embodiment may be based on the proposal 2. For example, each SRS resource may be based on the 4-port SRS resource described above. The 4-port SRS resource may mean an SRS resource with higher layer parameter nrofSRS-Ports, set to 'ports4', representing the number of ports.

For example, based on the UE capability of 3T3R or 3T6R, the at least one antenna port may be three antenna ports. The UE capability which is 3T3R or 3T6R may be indicated based on higher layer parameter (e.g., supportedSRS-TxPortSwitch or supportedSRS-TxPortSwitchBeyond4Rx) set to 't3r3' or 't3r6'.

As a specific example, for 3T6R, 0, 1 or 2 SRS resource sets may be configured. Each SRS resource set may include two SRS resources transmitted in different symbols. Each SRS resource in a given set (SRS resource set) may include four ports, and one of the four ports is disabled. The ports of each SRS resource in the SRS resource set are associated with different UE antenna ports. When two SRS resource sets are configured, two SRS resources based on the two SRS resource sets are transmitted in different symbols of different slots.

For example, the three antenna ports may be based on three antenna ports (e.g., ports 1000-1002) based on ascending order of antenna port indices among the four antenna ports (e.g., ports 1000-1003). As a specific example, the port 1003 among the ports 1000-1003 may be disabled.

According to the above-described embodiment, the antenna switching operation (e.g., 3TyR based operation) of the 3Tx UE may be performed through the existing defined SRS resource (4-port SRS resource). Therefore, the implementation complexity required to support the antenna switching operation (e.g., 3TyR based operation) of the 3Tx UE may be reduced by minimizing the enhancement of the existing defined UE/base station operation.

The operations based on the above-described steps S410 and S420 may be implemented by a device of FIG. 6. For example, a UE 200 may control one or more transceivers 230 and/or one or more memories 240 to perform the operations based on the steps S410 and S420.

Below, the above-described embodiments are described in detail from a perspective of base station operation.

Steps S510 and S520 described below correspond to the steps S410 and S420 described with reference to FIG. 4. Considering the above correspondence, redundant description is omitted. That is, the detailed description of the base station operation described below can be replaced with the description/embodiment of FIG. 4 corresponding to the base station operation.

FIG. 5 is a flowchart illustrating a method according to another embodiment of the present disclosure.

Referring to FIG. 5, a method according to another embodiment of the present disclosure includes a step S510 of transmitting configuration information and a step S520 of receiving an SRS based on at least one SRS resosurce set.

In the step S510, a base station transmits configuration information to a user equipment (UE). Based on the configuration information, at least one sounding reference signal (SRS) resource set related to antenna switching is configured.

In the step S520, the base station receives from the UE an SRS based on the at least one SRS resource set.

For example, the SRS may be received in different symbols based on multiple SRS resources in the at least one SRS resource set.

The operations based on S510 and S520 described above may be implemented by the device of FIG. 6. For example, a base station 100 may control one or more transceivers 130 and/or one or more memories 140 to perform the operations based on S510 and S520.

A device to which an embodiment of the present disclosure is applicable (a device implementing the method/operation according to an embodiment of the present disclosure) is described below with reference to FIG. 6.

FIG. 6 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method comprising:
receiving configuration information from a base station, at least one sounding reference signal (SRS) resource set related to antenna switching being configured based on the configuration information; and
transmitting, to the base station, an SRS based on the at least one SRS resource set,
wherein the SRS is transmitted in different symbols based on multiple SRS resources in the at least one SRS resource set, and
wherein based on a number of ports configured in each of the multiple SRS resources being different, a transmit power related to each port of one of the multiple SRS resources is same.

2. The method of claim 1, wherein the multiple SRS resources are related to a same SRS transmission occasion, and
wherein a transmit power for the SRS is determined based on the same SRS transmission occasion.

3. The method of claim 1, wherein a transmit power for the SRS is equally split across ports based on the multiple SRS resources in the different symbols.

4. The method of claim 1, wherein among transmit powers per port determined for the multiple SRS resources, a lowest transmit power is applied to ports of the multiple SRS resources.

5. The method of claim 1, wherein the number of ports configured in each of the multiple SRS resources is same, and wherein a linear value of a transmit power for the SRS is equally split across the ports of each SRS resource of each SRS resource set in a symbol.

6. The method of claim 1, wherein the at least one SRS resource set is configured based on a user equipment (UE) capability, and
wherein the UE capability of xTyR represents that a UE is capable of an SRS transmission on x ports based on y antennas.

7. The method of claim 6, wherein the y antennas are based on all or a subset of UE receive antennas.

8. The method of claim 6, wherein based on the UE capability of 3TyR:
each SRS resource in the at least one SRS resource set includes four antenna ports, and
in each SRS resource, the SRS is transmitted based on at least one antenna port of the four antenna ports.

9. The method of claim 8, wherein based on the UE capability of 3T3R or 3T6R, the at least one antenna port is three antenna ports.

10. The method of claim 9, wherein the three antenna ports are three antenna ports based on ascending order of antenna port indices among the four antenna ports.

11. A user equipment comprising:
one or more transceivers;
one or more processors; and
one or more memories connected to the one or more processors and storing instructions,
wherein the instructions allow the user equipment to perform all steps of a method according to any one of claims 1 to 10 based on being executed by the one or more processors.

12. A device comprising:
one or more memories; and
one or more processors operably connected to the one or more memories,
wherein the one or more memories store instructions that allow the device to perform all steps of a method according to any one of claims 1 to 10 based on being executed by the one or more processors.

13. One or more non-transitory computer readable mediums storing instructions,
wherein the instructions executable by one or more processors allow a user equipment to perform all steps of a method according to any one of claims 1 to 10.

14. A method comprising:
transmitting configuration information to a user equipment (UE), at least one sounding reference signal (SRS) resource set related to antenna switching being configured based on the configuration information; and
receiving, from the UE, an SRS based on the at least one SRS resource set,
wherein the SRS is received in different symbols based on multiple SRS resources in the at least one SRS resource set, and
wherein based on a number of ports configured in each of the multiple SRS resources being different, a transmit power related to each port of one of the multiple SRS resources is same.

15. A base station comprising:
one or more transceivers;
one or more processors; and
one or more memories connected to the one or more processors and storing instructions,
wherein the instructions allow the base station to perform all steps of a method according to claim 14 based on being executed by the one or more processors.
